Europäisches Patentamt

European Patent Office

Office européen des brevets

(11) Veröffentlichungsnummer: **0 364 870**

**A2**

(12) # EUROPÄISCHE PATENTANMELDUNG

(21) Anmeldenummer: **89118864.1**

(22) Anmeldetag: **11.10.89**

(51) Int. Cl.⁵: **A47B 13/06 , F16B 12/32 , A47B 17/00**

(30) Priorität: **07.12.88 DE 3841132**
**19.10.88 DE 8813152 U**

(43) Veröffentlichungstag der Anmeldung:
**25.04.90 Patentblatt 90/17**

(84) Benannte Vertragsstaaten:
**AT BE CH DE FR GB LI NL**

(71) Anmelder: **Drabert Söhne GmbH & Co.**
**Wilhelmstrasse 11-17**
**D-4950 Minden(DE)**

(72) Erfinder: **Korte, Friedrich**
**Mindener Strasse 92**
**D-4950 Minden(DE)**

(74) Vertreter: **Thielking, Bodo, Dipl.-Ing. et al**
**Patentanwälte Dipl.-Ing. Bodo Thielking**
**Dipl.-Ing. Otto Elbertzhagen Gadderbaumer**
**Strasse 20**
**D-4800 Bielefeld 1(DE)**

(54) **Büromöbelgestell.**

(57) Bei einem Büromöbelgestell mit vertikalen Ständern (110) und horizontalen Anschlußelementen weisen die vertikalen Ständer einen zumindest annähernd dreieckigen Querschnitt auf sowie mindestens eine hinterschnittene Längsnut (112), in der ein Flansch (107) eines horizontalen Anschlußelements mittels mindestens einer Klemmschraube (109) fixierbar ist.

Fig. 7

EP 0 364 870 A2

# Büromöbelgestell

Die Erfindung betrifft ein Büromöbelgestell mit vertikalen Ständern und horizontalen Anschlußelementen.

Derartige Büromöbelgestelle sind in unterschiedlichen Ausführungsformen bekannt.

Der Erfindung liegt die Aufgabe zugrunde, ein Büromöbelgestell der als bekannt vorausgesetzten Art so auszubilden, daß eine besonders günstige Kraftübertragung zwischen den senkrechten Ständern und den waagerechten Anschlußelementen ermöglicht wird, wobei die Ständer und die Anschlußelemente besonders vielfältig kombinierbar sind.

Die Lösung dieser Aufgabe erfolgt dadurch, daß die vertikalen Ständer einen zumindest annähernd dreieckigen Querschnitt aufweisen und mindestens eine hinterschnittene Längsnut, in der ein Flansch eines horizontalen Anschlußelements mittels mindestens einer Klemmschraube fixierbar ist.

Das Vorsehen eines im Querschnitt dreiecksförmigen Ständers mit einer hinterschnittenen Längsnut erlaubt eine Anordnung des Flasches des horizontalen Anschlußelements in beliebiger Höhe. Aus der Dreiecksform des Ständers resultieren besonders vielfältige Kombinationsmöglichkeiten.

Bevorzugte Ausführungsformen der Erfindung sind in den Unteransprüchen beschrieben.

Nachstehend werden bevorzugte Ausführungsformen der Erfindung anhand der Zeichnungen im einzelnen beschrieben. Es zeigen:

Figur 1 - eine perspektivische Ansicht eines vertikalen Ständers mit einem Teil eines angeschlossenen horizontalen Bereichs,

Figur 2 - zwei vertikale Ständer mit einem horizontal angeschlossenen Kabelkanal,

Figur 3 - einen horizontalen Schnitt durch die Anordnung gemäß Figur 1,

Figur 4 - einen horizontalen Schnitt durch die Anordnung gemäß Figur 2,

Figur 5 - einen Schnitt entlang Ebene V-V in Figur 4,

Figur 6 - einen horizontalen Schnitt durch eine weitere Anordnung,

Figur 7 - eine perspektivische Darstellung einer weiteren Ausführungsform, teilweise in Explosionsdarstellung,

Figur 8 - eine schematische Draufsicht auf eine Schreibtischanordnung.

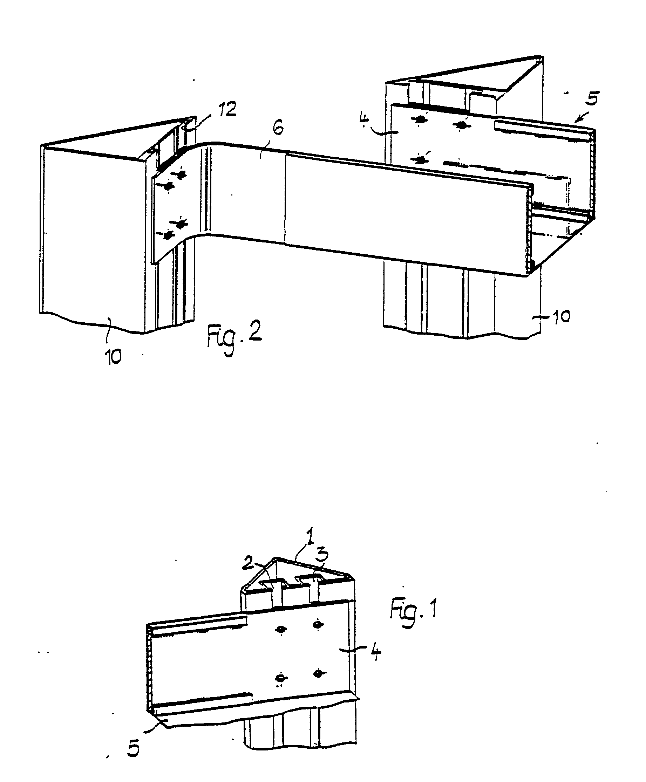

Bei der Ausführungsform gemäß Figur 1 besitzt der Ständer 1 zwei hinterschnittene Längsnuten 2 und 3, in denen Klemmelemente 13 liegen, welche Muttergewinde aufweisen. In das Muttergewinde greifen die Klemmschrauben 9 ein. Die Klemmschrauben 9 durchsetzen entsprechend angeordnete Bohrungen in Flanschen 4. Die Flansche 4 sind mit den Seitenwänden eines U-förmigen Profils 5 verschweißt.

Ein weiterer im Querschnitt dreiecksförmiger vertikaler Ständer ist mit 10 bezeichnet. Bei dieser Ausführungsform gemäß Figuren 4 und 5 sind die Hypotenusen zweier benachbarter Dreiecksprofile fluchtend angeordnet. Es ist bei dieser Ausführung pro Dreiecksprofil lediglich eine Längsnut 12 vorgesehen. In dieser Längsnut liegt das Klemmelement 8, das ebenfalls Muttergewinde zur Aufnahme der Klemmschrauben 9 besitzt. Die Klemmschrauben 9 durchsetzen bei der Ausführungsform gemäß Figur 4 einen abgewinkelten Flansch 7 bzw. einen geringfügig gekröpften Flansch 4. Das U-förmige Kastenprofil 5, welches als Kabelkanal dient, erstreckt sich in Richtung einer Kathete eines Ständers 10.

Bei der Ausführungsform gemäß Figur 6 ist ein bügelartiger Flansch 11 vorgesehen, der ebenfalls über Klemmschrauben 9 und eine Klemmplatte 8 in der zugehörigen Nut des vertikalen Ständers 10 befestigt ist. Der bügelartige Flansch 11 ist mit seinen parallelen Enden an den Seitenwänden des U-förmigen Kastenprofils 5 verschweißt.

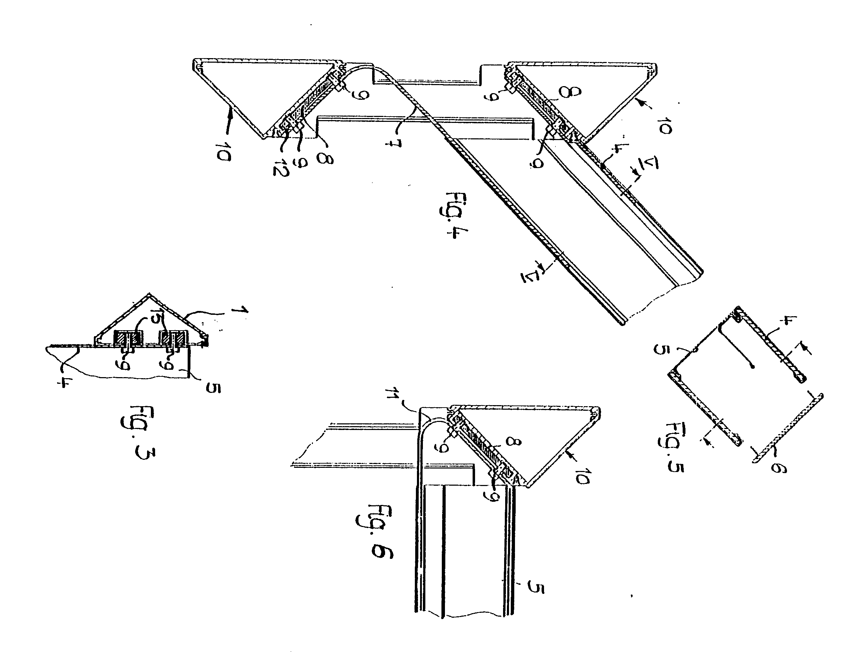

Bei den Ausführungsformen gemäß Figuren 1 bis 6 sind hinterschnittene Längsnuten jeweils nur an einer einzigen Seite des Dreiecksprofils vorgesehen. Es ist selbstverständlich möglich, die hinterschnittenen Längsnuten an zwei oder allen Seitenflächen vorzusehen, wobei auch mehrere Längsnuten pro Seitenfläche vorgesehen sein können.

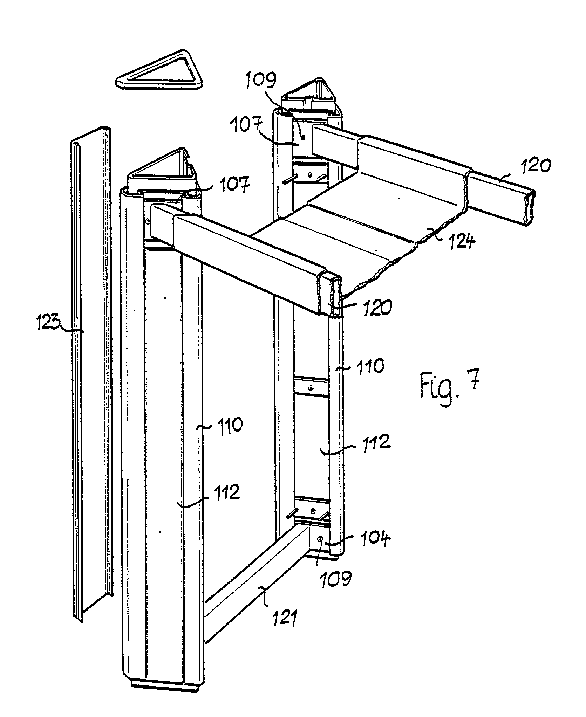

Bei der Ausführungsform gemäß Figur 7 sind Ständer 110 vorgesehen, welche hinterschnittene Längsnuten 112 an allen drei Seiten aufweisen. In die Längsnuten sind im oberen Bereich Flansche 107 eingeschoben, welche an den Stirnseiten von parallel sich erstreckenden Rohren 120 befestigt sind. Die Flansche 107 werden mit Hilfe von gegebenenfalls mehrfach vorgesehenen Klemmschrauben fixiert. Im unteren Bereich sind die Ständer 110 durch ein quer verlaufendes Rohr 121 verbunden, an dessen beiderseitigen Enden jeweils Flansche 104 sitzen, die mit einer Klemmschraube 109 an den Ständern 110 fixiert sind.

Zwischen den Rohren 120 ist eine als Kabelkanal dienende Trägerwanne 124 eingehängt.

Mit 123 sind Blendenstücke bezeichnet, die zum Verschließen der unbenutzten Längsnuten dienen.

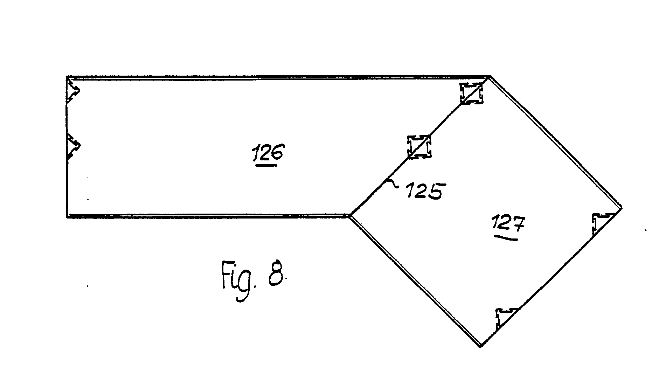

In Figur 8 ist die Draufsicht auf eine mögliche Anordnung des Büromöbelgestells mit aufliegender Schreibtischplatte dargestellt. An der Trennfuge 125 der beiden Tischplatten 126 und 127 sind jeweils zwei vertikale Ständer mit ihren Hypotenusen so zusammengesetzt, daß ein rechteckiges oder quadratisches Gesamtständerprofil entsteht. In der Darstellung gemäß Figur 8 sind die horizontalen Elemente nicht dargestellt.

**Ansprüche**

1. Büromöbelgestell mit vertikalen Ständern und horizontalen Anschlußelementen, dadurch gekennzeichnet, daß die vertikalen Ständer (1; 10; 110) einen zumindest annähernd dreieckigen Querschnitt aufweisen und mindestens eine hinterschnittene Längsnut (2; 3; 12, 112) in der ein Flansch (4; 7; 104; 107) eines horizontalen Anschlußelements mittels mindestens einer Klemmschraube (9; 109) fixierbar ist.

2. Büromöbelgestell nach Anspruch 1, dadurch gekennzeichnet, daß der Flansch (104, 107) an der Stirnseite des als Rohr (120; 121) ausgebildeten horizontalen Anschlußelements vorgesehen ist.

3. Büromöbelgestell nach Ansprüchen 1 und 2, dadurch gekennzeichnet, daß der Flansch (104; 107) rechtwinklig zur Längsachse des Rohrs (120; 121) verläuft.

4. Büromöbelgestell nach Ansprüchen 1 und 2, dadurch gekennzeichnet, daß der Flansch (107; 104) unter 45° zur Längsachse des Rohrs (120; 121) verläuft.

5. Büromöbelgestell nach einem oder mehreren der Ansprüche 1 bis 4, dadurch gekennzeichnet, daß mindestens eine Längsnut (2; 3; 12; 112) an jeder vertikalen Außenseite des Ständers (10; 110) vorgesehen ist.

6. Büromöbelgestell nach einem oder mehreren der Ansprüche 1 bis 5, dadurch gekennzeichnet, daß die Längsnuten (2; 3; 12; 112) durch Blenden (123) verschließbar sind.

7. Büromöbelgestell nach einem oder mehreren der Ansprüche 1 bis 6, dadurch gekennzeichnet, daß in der hinterschnittenen Längsnut (2; 3; 12) ein Klemmelement (13; 8) mit Muttergewinde angeordnet ist, in das die Klemmschraube (9) eingreift.

8. Büromöbelgestell nach einem oder mehreren der Ansprüche 1 bis 7, dadurch gekennzeichnet, daß die Klemmschraube (9) einen horizontal verlaufenden Flansch (4; 7; 11) durchsetzt, welcher mit den Seitenwänden eines horizontal verlaufenden U-förmigen Kastenprofils (5) fest verbunden ist.

9. Büromöbelgestell nach einem oder mehreren der Ansprüche 1 bis 8, dadurch gekennzeichnet, daß die Flansche (4; 7; 11) mit den Seitenwänden des Kastenprofils (5) verschweißt sind.

10. Büromöbelgestell nach einem oder mehreren der Ansprüche 1 bis 9, dadurch gekennzeichnet, daß die Flansche (4) an ihren oberen und unteren Seitenkanten von gekröpften Kanalbereichen des Kastenpofils (5) übergriffen sind, wobei die Seitenkanten fest an den senkrecht zur Seitenwand abgewinkelten Bereichen des Kastenprofils anliegen.

11. Büromöbelgestell nach einem oder mehreren der Ansprüche 1 bis 10, dadurch gekennzeichnet, daß zwei dreiecksförmige vertikale Ständer (10; 110) mit fluchtender Hypotenuse angeordnet sind und zwischen den beiden Ständern eine gemeinsame Abdeckung zur Bildung einer im wesentlichen geschlossenen Seitenwange.

12. Büromöbelgestell nach einem oder mehreren der Ansprüche 1 bis 11, dadurch gekennzeichnet, daß das U-förmige, waagerecht verlaufende Kastenprofil (5) in Verlängerung einer Kathete eines Ständers (10; 110) angeordnet ist.

13. Büromöbelgestell nach einem oder mehreren der Ansprüche 1 bis 12, dadurch gekennzeichnet, daß zwei Hypotenusen benachbarter Ständer (110) unmittelbar aneinander anliegend und mit Hilfe eines in die beiden gegenüberliegenden Längsnuten eingreifenden Verbindungselements verbindbar sind.

14. Büromöbelgestell nach einem oder mehreren der Ansprüche 1 bis 13, dadurch gekennzeichnet, daß zwischen zwei parallel sich erstreckende Rohre (120) ein trogartiges Zwischenstück (124) zur Bildung eines Kabelkanals einsetzbar ist.

Fig. 2

Fig. 1

Fig. 5

Fig. 4

Fig. 6

Fig. 3

Fig. 7

*126*

*125*

*127*

Fig. 8